# EUROPEAN PATENT APPLICATION

(11) **EP 2 083 308 A1**
(43) Date of publication of application: **29.07.2009**
(21) Application number: 08165363.6
(22) Date of filing: 29.09.2008
(51) Int. Cl.: G02B 26/08

(54) **Optical device, optical communication apparatus, and method of controlling optical device**

(30) Priority: 28.01.2008 JP 2008016429
(71) Applicant: Fujitsu Limited, Kawasaki-shi, Kanagawa 211-8588 (JP)
(72) Inventor: Furukawa, Hiroyuki, Kanagawa 211-8588 (JP); Ishii, Yuji, Fukuoka 814-8588 (JP); Mori, Kazuyuki, Kanagawa 211-8588 (JP)
(74) Representative: HOFFMANN EITLE

(57) **Abstract**

An optical device includes an I/O port group and a movable mirror reflecting light input through an input port of the I/O group, aligning the light reflected with an output port of the I/O port group, and changing the angle of the light reflected according to a driving voltage supplied thereto. The optical device further includes a control unit that adjusts the driving voltage within a range lower than the voltage at which the degree of alignment of the light with respect to the output port is maximized and controls attenuation of the light reflected by the moveable mirror.

## Description

### CROSS-REFERENCE TO RELATED APPLICATIONS

This application is based upon and claims the benefit of priority from the prior Japanese Patent Application No. 2008-016429, filed on January 28, 2008, the entire contents of which are incorporated herein by reference.

### BACKGROUND OF THE INVENTION

### 1. Field of the Invention

The present invention relates to an optical device that performs light attenuation control, an optical communication apparatus, and a method of controlling the optical device.

### 2. Description of the Related Art

In recent years, optical add-drop multiplexor (OADM) apparatuses have been commercially introduced at a good pace to achieve high flexibility and redundancy of networks. OADM apparatuses must be capable of routing a given wavelength component of an optical signal to an arbitrary path within, for example, ring networks.

In order to build a new network or to change part of a network, it is necessary to combine a number of devices to realize the targeted configuration and function. When building a network, it is essential to determine the sequence of connections and procedures of the devices, or to integrate a startup sequence by software or hardware so as to prevent damage of the devices due to improper startup.

However, it is difficult to control the work sequence thoroughly under actual operation at a local station, and there is a risk of damage of the devices due to errant operation. Therefore, it is desirable for respective devices, such as the OADM apparatus, to be designed so as to prevent damage and/or operation error even when operated without consideration of the startup sequence.

Some optical switches mounted on wavelength multiplexing OADM apparatuses further control attenuation control in addition to controlling path switching and adjust signal level on a node-to-node basis, such as those described in Japanese Patent Application Laid-Open Publication Nos. 2006-243571 and 2007-10966. Various cases are assumed and a signal level subject to a certain attenuation level is adjusted to an optimal level for according to the network built.

For example, the optical switch includes an input port, a movable mirror, and an output port, and causes light input through the input port to be reflected from the movable mirror, aligned with and output from the output port. The reflected light output from the output port is attenuated by a shifting of the alignment of the reflected light with respect to the output ports by a slight rotation of the movable mirror.

However, in the conventional technology, when power to the optical switch is disconnected during configuration of the network or when increasing the range of wavelengths used in wavelength division multiplexing and hence the driving voltage supplied to the movable mirror abruptly drops, the alignment of the light with respect to the output ports suddenly changes, possibly resulting in an optical surge. The optical surge exerts an excessive load on optical elements provided in a downstream light-receiving apparatus and may cause damage of the optical elements.

In particular, when an optical amplifier is provided between the optical switch and the downstream light-receiving apparatus, an optical surge generated by the optical switch is amplified by the optical amplifier, and the load imposed on the optical elements in the downstream light-receiving apparatus due to the optical surge significantly increases. When automatic power control is performed in the downstream light-receiving apparatus, there arises a problem of further amplification of the optical surge or a problem of instability of the automatic power control due to the occurrence of the optical surge.

### SUMMARY OF THE INVENTION

It is an object of the present invention to at least solve the above problems in the conventional technologies.

An optical device according to one aspect of the present invention includes a port group including an input port and an output port; a movable mirror that reflects light input through the input port, aligns the light reflected with the output port, and according to a driving voltage, changes a degree of alignment of the light with respect to the output port; and an attenuation control unit that adjusts the driving voltage supplied to the movable mirror to control attenuation of the light reflected, the attenuation control unit adjusting the driving voltage within a range lower than a voltage at which the degree of alignment is maximized.

An optical communication apparatus according to another aspect of the present invention includes an optical device including a port group including an input port and an output port, a movable mirror that reflects light input through the input port, aligns the light reflected with the output port, and according to a driving voltage, changes a degree of alignment of the light with respect to the output port, and an attenuation control unit that adjusts the driving voltage supplied to the movable mirror to control attenuation of the light reflected, where the attenuation control unit adjusting the driving voltage within a range lower than a voltage at which the degree of alignment is maximized. The optical communication apparatus further includes an amplifying unit that amplifies the light to be output from the output port; and a transmitting unit that transmits the light amplified by the amplifying unit.

A method according to still another aspect of the present invention is for controlling an optical device that includes a port group including an input port and an output port, and a movable mirror that reflects light input through the input port, aligns the light reflected with the output port, and according to a driving voltage, changes a degree of alignment of the light with respect to the output port. The method includes determining a driving voltage at which the degree of alignment of the light with respect to the output port is maximized; and attenuating the light by adjusting the driving voltage supplied to the movable mirror within a range lower than the driving voltage determined at the determining.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a perspective view of an optical device according to an embodiment;
Fig. 2 is a diagram of the optical device shown in Fig. 1 viewed from the Y-axis;
Fig. 3 is a diagram of the optical device shown in Fig. 1 viewed from the X-axis;
Fig. 4 is a diagram of a shutter operation in the optical device shown in Fig. 1;
Fig. 5 is a diagram of attenuation control with respect to the Y-axis by the optical device shown in Fig. 1;
Fig. 6 is a diagram of attenuation control with respect to the X-axis;
Fig. 7 is a graph depicting the relationship between the rotation angle of a movable mirror and the transmissivity of light;
Fig. 8 is a graph depicting the relationship between driving voltage supplied to the movable mirror and the rotation angle of the movable mirror;
Fig. 9 is a diagram of an I/O port group shown in Fig. 1 viewed from the Z-axis;
Fig. 10 is a graph for explaining movement of a spot of the light in the optical device;
Fig. 11 is a block diagram of an example of a configuration of a control unit;
Fig. 12 is a block diagram of another example of a configuration of the control unit;
Fig. 13 is a flowchart of an example of a preprocessing operation of attenuation control performed by a CPU;
Fig. 14 is a flowchart of an example of step S1301 shown in Fig. 13;
Fig. 15 is a flowchart of an example of step S1302 shown in Fig. 13;
Fig. 16 is a flowchart of an example of step S1303 in Fig. 13;
Fig. 17 is a block diagram of a functional configuration of an optical communication apparatus according to the embodiment; and
Fig. 18 is a block diagram of a configuration of an optical communication system according to the embodiment.

### DETAILED DESCRIPTION OF THE PREFERRED EMBODIMENTS

Referring to the accompanying drawings, exemplary embodiments according to the present invention are explained in detail below.

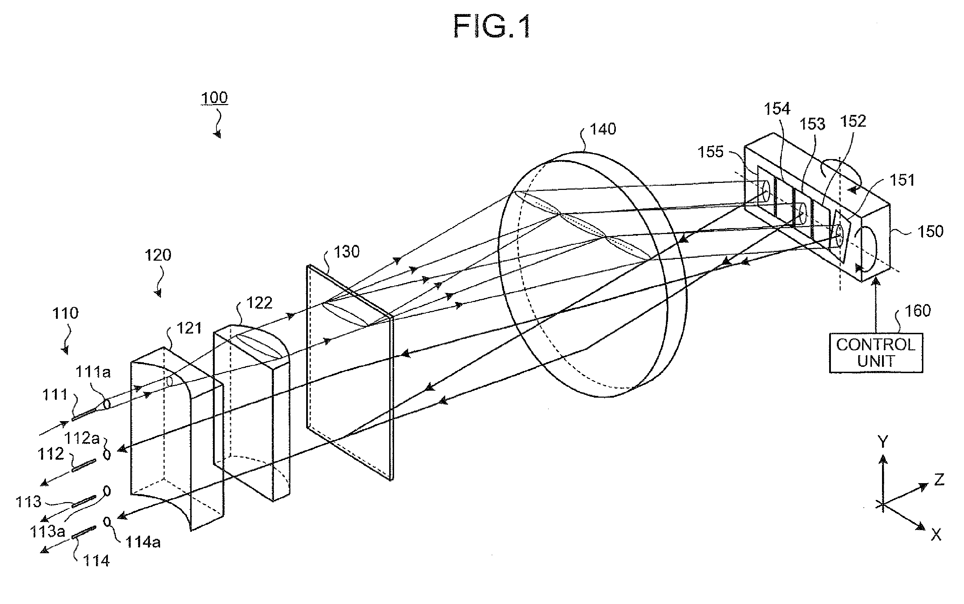

Fig. 1 is a perspective view of an optical device according to an embodiment. As shown in Fig. 1, an optical device 100 according to the embodiment is a wavelength selection switch that separates light input thereto into components according to wavelength, and for each of the components, switches the port used for output depending on the wavelength of the component. The optical device 100 includes an input and output (I/O) port group 110, a lens group 120, a spectral dispersion element 130, a lens 140, a microelectromechanical system (MEMS) mirror array 150, and a control unit 160.

The I/O port group 110 includes an input port and output ports. A port 111 corresponds to the input port and ports 112, 113, and 114 correspond to the output ports. The ports 111 to 114 are disposed linearly with respect to the Y-axis in the figure. The port 111 transmits light input from an external source toward the lens group 120. A collimator 111a is provided on the lens group 120 side of the port 111. The collimator 111a collimates the dispersed light transmitted from the port 111 and transmits the light toward the lens group 120.

The light transmitted from the lens group 120 is aligned with the ports 112 to 114. The ports 112 to 114 output to an external destination, the light respectively aligned therewith. Collimators 112a to 114a are provided on the lens group 120 side of the ports 112 to 114, respectively. The collimators 112a to 114a converge the light transmitted from the lens group 120 and align the light with the ports 112 to 114, respectively.

The lens group 120 is a beam expander that widens the beam diameter of light transmitted from the port 111. The lens group 120 includes a concave lens 121 and a convex lens 122. The concave lens 121 disperses light transmitted from the port 111 and transmits the light to the convex lens 122. The convex lens 122 collimates the light transmitted from the concave lens 121 and transmits the light to the spectral dispersion element 130. The lens group 120 narrows the beam diameter of light transmitted from the spectral dispersion element 130. The lens group 120 transmits the light toward the ports 112 to 114.

The spectral dispersion element 130 separates the light transmitted from the lens group 120. The spectral dispersion element 130 separates the light into components according to wavelength, where wavelength components are separated respectively along the X-axis in the figure, and transmits the light (separated into components based on wavelength) toward the lens 140. The components of the light separated by the spectral dispersion element 130 are dispersed at angles along the X-axis corresponding respectively to the wavelengths thereof and are transmitted to the lens 140. The spectral dispersion element 130 further combines the light transmitted from the lens 140 and transmits the light to the lens group 120. The spectral dispersion element 130 is, for example, a diffraction grating.

The lens 140 collimates the light from the spectral dispersion element 130 in an XZ plane define by the X-axis and the Z-axis, converges (along the Y-axis) each component of the light, and transmits the components to the MEMS mirror array 150. The lens 140 converges (along the X-axis) each component reflected from the MEMS mirror array 150, collimates the light in a YZ plane defined by the Y-axis and the Z-axis, and transmits the components to the spectral dispersion element 130. The lens 140 is a convex lens.

The MEMS mirror array 150 includes multiple movable mirrors 151 to 155. The movable mirrors 151 to 155 respectively correspond to the wavelength components separated by the spectral dispersion element 130, and are disposed linearly with respect to the X-axis. The movable mirrors 151 to 155 respectively reflect a component of the light from the lens 140 having the wavelength corresponding thereto.

The light reflected from each of the movable mirrors 151 to 155 passes through the lens 140, the spectral dispersion element 130, and the lens group 120 and is aligned with the port 112, the port 113, or the port 114. The each of the movable mirrors 151 to 155 is rotatable about the X-axis and the Y-axis. The each of the movable mirrors 151 to 155 is a microelectromechanical system (MEMS) mirror that biaxially rotates according to the supply of driving voltages from two systems corresponding to the respective axes of rotation to change the angle of reflection.

In the following explanation, the driving voltages corresponding to the rotation of the movable mirrors 151 to 155 about the X-axis are represented as driving voltages Vx1 to Vx5, respectively. The driving voltages corresponding to the rotation of the movable mirrors 151 to 155 about the Y-axis are represented as driving voltages Vy1 to Vy5.

The control unit 160 supplies, through two systems, driving voltages Vx1 to Vx5 and Vy1 to Vy5 to the movable mirrors 151 to 155 of the MEMS mirror array 150, respectively. The control unit 160 has a function of a switch control unit that adjusts the respective driving voltages supplied to the movable mirrors 151 to 155 to switch the port that inputs/outputs the light among the ports 111 to 114 of the I/O port group 110, and a function of an attenuation control unit that controls attenuation of the light to be output from the ports 112 to 114.

The control unit 160 performs switch control to switch output of the light (input from the port 111) between the ports 112 to 114. In this case, the optical device 100 functions as a one-input and three-output switch. The control unit 160 may switch the output port individually according to each wavelength component of the light input from the port 111. In this case, the optical device 100 functions as a one-input and three-output wavelength selection switch. The control unit 160 is, for example, a central processing unit (CPU).

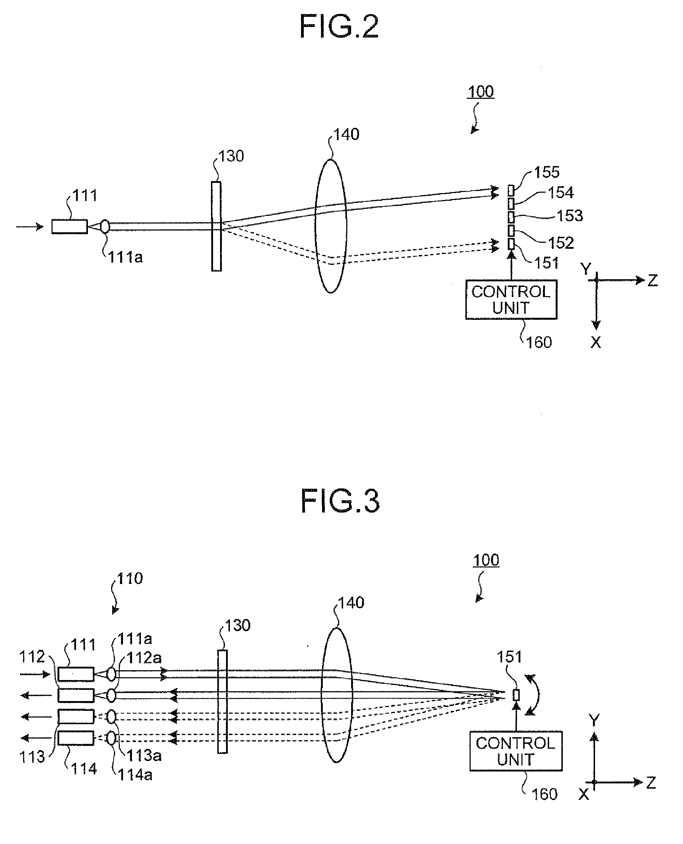

Fig. 2 is a diagram of the optical device shown in Fig. 1 viewed from the Y-axis. In Fig. 2, components identical to those shown in Fig. 1 are designated by identical reference numerals, respectively and explanation thereof is omitted. In the drawings hereinafter beginning from Fig. 2, the lens group 120 is not shown. Further, although the MEMS mirror array 150 is not shown, the movable mirrors 151 to 155 provided in the MEMS mirror array 150 are shown. As shown in Fig. 2, the light input from the port 111 is separated along the X-axis by the spectral dispersion element 130, and each separated component of the light is transmitted respectively to one of the movable mirrors 151 to 155 according to the wavelength thereof.

Fig. 3 is a diagram of the optical device shown in Fig. 1 viewed from the X-axis. In Fig. 3, components identical to those shown in Fig. 1 are designated by identical reference numerals, respectively and explanation thereof is omitted. As shown in Fig. 3, the movable mirror 151 slightly rotates about the X-axis according to the driving voltage Vx1 supplied from the control unit 160. The movable mirror 151 changes the reflection angle of the light transmitted from the lens 140 by slightly rotating about the X-axis.

Consequently, the light reflected from the movable mirror 151 is aligned with the port 112, the port 113, or the port 114 according to the degree of rotation of the movable mirror 151. In an identical manner, the movable mirrors 152 to 155 rotate slightly about the X-axis according to the driving voltages Vx2 to Vx4 supplied. The control unit 160 adjusts the driving voltages Vx1 to Vx5 respectively supplied to the movable mirrors 151 to 155 to perform the switch control of switching between the ports 112 to 114 to output the light reflected from each of the movable mirrors 151 to 155.

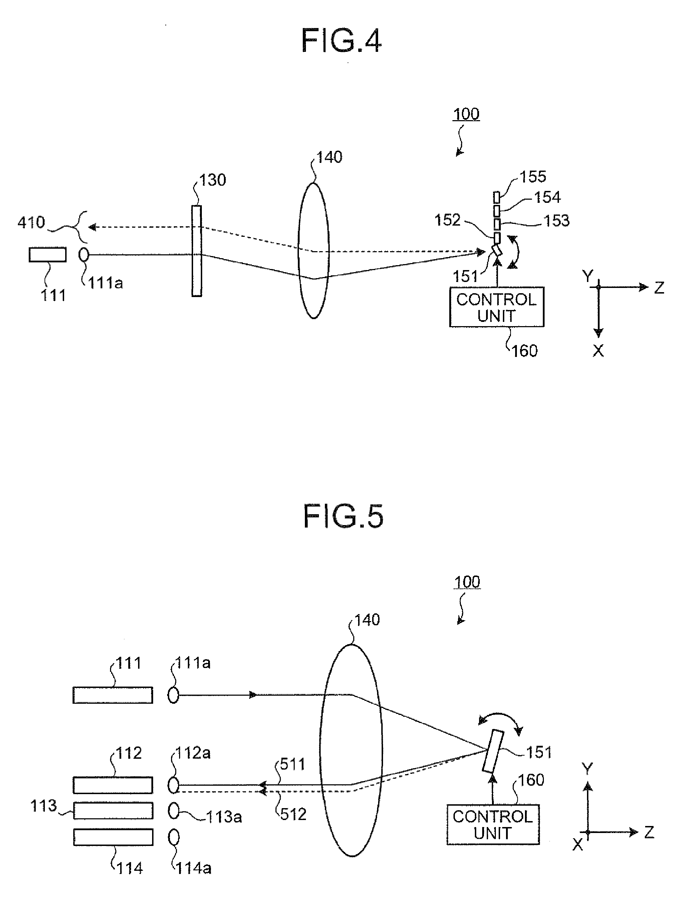

Fig. 4 is a diagram of a shutter operation in the optical device shown in Fig. 1. In Fig. 4, components identical to those shown in Fig. 2 are designated by identical reference numerals, respectively and explanation thereof is omitted. As shown in Fig. 4, the movable mirror 151 rotates slightly about the Y-axis according to the driving voltage Vy1 supplied from the control unit 160. Consequently, the movable mirror 151 changes the reflection angle of the light transmitted from the lens 140 to the port 111.

In this embodiment, the movable mirror 151 is designed such that the light reflected from the movable mirror 151 is output to a shutter area 410 when the driving voltage Vy1 is not supplied to the movable mirror 151. The shutter area 410 is an area located at a position different from the position of the I/O port group 110. The light reflected from the movable mirror 151 is not aligned with any one of the ports 112 to 114 when transmitted to the shutter area 410.

Likewise, the movable mirrors 152 to 155 rotate slightly about the Y-axis according to the driving voltages Vy2 to Vy5 respectively supplied. The control unit 160 adjusts the driving voltages Vy1 to Vy5 supplied to the movable mirrors 151 to 155 respectively to perform the shutter operation that causes the light reflected from each of the movable mirrors 151 to 155 to be transmitted to the shutter area 410.

The control unit 160 changes the driving voltages Vx1 to Vx5 supplied to the movable mirrors 151 to 155 respectively to perform the switch control when the light has been transmitted to the shutter area 410 by the shutter operation, and after completing the switch control, controls the movable mirrors 151 to 155 to reflect the light to the original positions parallel to the X-axis. Accordingly, the phenomenon of crosstalk, which occurs when the reflected light is aligned with an unintended output port in the course of the switch control, is prevented. For example, in the course of switching from the port 112 to the port 114 to output the reflected light, alignment of the reflected light with respect to the port 113 is prevented.

Fig. 5 is a diagram of attenuation control with respect to the Y-axis by the optical device shown in Fig. 1. In Fig. 5, components identical to those shown in Fig. 3 are designated by identical reference numerals, respectively and explanation thereof is omitted. In the drawings hereinafter beginning from Fig. 5, the spectral dispersion element 130 is not shown. Attenuation control when the light reflected from the movable mirror 151 is to be output from the port 112 is described. An optical path 511 and an optical path 512 respectively correspond to paths of the light reflected from the movable mirror 151 when the movable mirror 151 is slightly rotated about the X-axis.

When the path of the light reflected from the movable mirror 151 is the optical path 511, the light reflected from the movable mirror 151 enters the collimator 112a at a center portion with respect to the Y-axis, and the light reflected from the movable mirror 151 is maximally aligned with respect to the port 112. Accordingly, the transmissivity of the light output from the port 112 is maximized. When the path of the light reflected from the movable mirror 151 is the optical path 512, the light reflected from the movable mirror 151 enters the collimator 112a at a position deviating from the center position along the Y-axis, and the degree of alignment of the light reflected from the movable mirror 151 with respect to the port 112 decreases.

The greater the deviation from the center portion (along the Y-axis) of the collimator 112a of the port 112, the more alignment of the light with respect to the port 112 decreases. The more alignment of the light with respect to the port 112 decreases, the more transmissivity of the light output from the port 112 decreases (the attenuation level increases). The control unit 160 shifts (along the Y-axis) the alignment of the light with respect to the port 112 by slightly rotating the movable mirror 151 about the X-axis.

Accordingly, the attenuation control with respect to the Y-axis to control the attenuation level of the light output from the port 112 is achieved. In the attenuation control witch respect to the Y-axis, the control unit 160 adjusts the driving voltage Vx1 supplied to the movable mirror 151 at a range lower than the optimal point of the driving voltage Vx1. The optimal point of the driving voltage Vx1 means a driving voltage Vx1 at which the degree of alignment of the light reflected from the movable mirror 151 with respect to the port 112 is maximized.

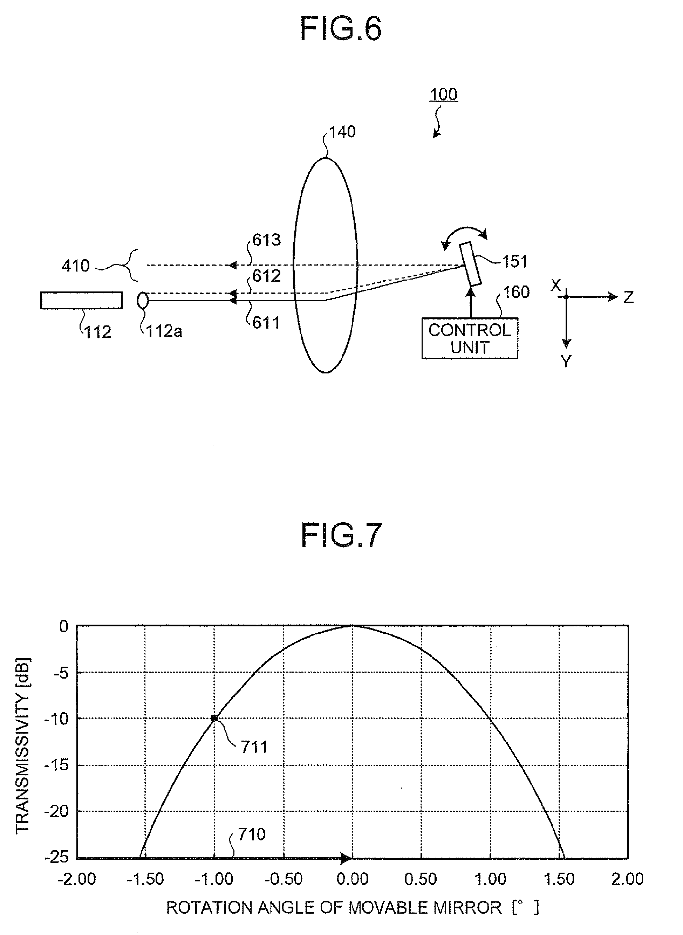

Fig. 6 is a diagram of attenuation control with respect to the X-axis. In Fig. 6, components identical to those shown in Fig. 4 are designated by identical reference numerals, respectively and explanation thereof is omitted. The port 111 is not shown in Fig. 6. Optical paths 611, 612, and 613 respectively correspond to paths of the light reflected from the movable mirror 151 when the movable mirror 151 is slightly rotated about the Y-axis.

When the path of the light reflected from the movable mirror 151 is the optical path 611, the light reflected from the movable mirror 151 enters the collimator 112a at a center position with respect to the X-axis, and the light reflected from the movable mirror 151 is maximally aligned with respect to the port 112. Accordingly, the transmissivity of the light output from the port 112 is maximized. When the path of the reflected light from the movable mirror 151 is the optical path 612, the light reflected from the movable mirror 151 enters the collimator 112a at a position deviating from the center position along the X-axis, and the degree of alignment of the light reflected from the movable mirror 151 with respect to the port 112 decreases.

When the path of the light reflected from the movable mirror 151 is the optical path 613, the light reflected from the movable mirror 151 deviates along the X-axis completely away from the collimator 112a, and enters the shutter area 410. In this case, the light reflected from the movable mirror 151 is not aligned with the port 112.

The greater the deviation along the X-axis from the center of the collimator 112a of the port 112, the more alignment of the light with respect to the port 112 decreases. The more alignment of the light with respect to the port 112 decreases, the more transmissivity of the light output from the port 112 decreases (the attenuation level increases). The control unit 160 shifts (along the X-axis) the alignment of the light with respect to the port 112 by slightly rotating the movable mirror 151 about the Y-axis.

Accordingly, the attenuation control with respect to the X-axis to control the attenuation level of the light output from the port 112 is achieved. In the attenuation control with respect to the X-axis, the control unit 160 adjusts the driving voltage Vy1 supplied to the movable mirror 151 at a range lower than the optimal point of the driving voltage Vy1. The optimal point of the driving voltage Vy1 means a driving voltage Vy1 at which the degree of alignment of the light reflected from the movable mirror 151 with respect to the port 112 is maximized.

The control unit 160 performs the attenuation control with respect to the Y-axis shown in Fig. 5 or the attenuation control with respect to the X-axis shown in Fig. 6. The control unit 160 may perform the attenuation control with respect to the Y-axis and the attenuation control with respect to the X-axis in combination. More specifically, the control unit 160 slightly rotates the movable mirror 151 biaxially about the Y-axis and the X-axis by changing the combination of the driving voltage Vx1 and the driving voltage Vy1 supplied to the movable mirror 151.

Fig. 7 is a graph depicting the relationship between the rotation angle of the movable mirror and the transmissivity of the light. In Fig. 7, the horizontal axis indicates the rotation angle (degree (°)) of the movable mirror 151 about the Y-axis. The vertical axis indicates the transmissivity (decibel (dB)) of the light reflected from the movable mirror 151 and output from the port 112. A rotation angle of 0° is an optimal point for the alignment of the light reflected from the movable mirror 151 with respect to a center position (along the X-axis) of the collimator 112a.

As shown in Fig. 7, as the rotation angle of the movable mirror 151 increases from -2.0° to 0°, the light approaches the center position (along the X-axis) of the collimator 112a, and the transmissivity of the light output from the port 112 increases (the attenuation level decreases). When the rotation angle of the movable mirror 151 is further increased from 0°, the light moves away from the center position (along the X-axis) of the collimator 112a, and the transmissivity of the reflected light output from the port 112 decreases (the attenuation level increases).

When the rotation angle of the movable mirror 151 is -4.0° or 4.0°, although it is not shown, the light reflected from the movable mirror 151 is not aligned with the port 112, and the transmissivity of the light output from the port 112 decreases further to a level lower than -25 dB. In this case, virtually none of the light is output from the port 112 (the shutter operation, see Fig. 4) .

Changes in transmissivity of the light according to the rotation of the movable mirror 151 about the Y-axis have been explained. However, the changes in transmissivity of the light according to the rotation of the movable mirror 151 about the X-axis are identical. A range 710 indicates a range in which the rotation angle of the movable mirror 151 is less than 0°. A control point 711 indicates a point at which the rotation angle of the movable mirror 151 is -1.0 degree.

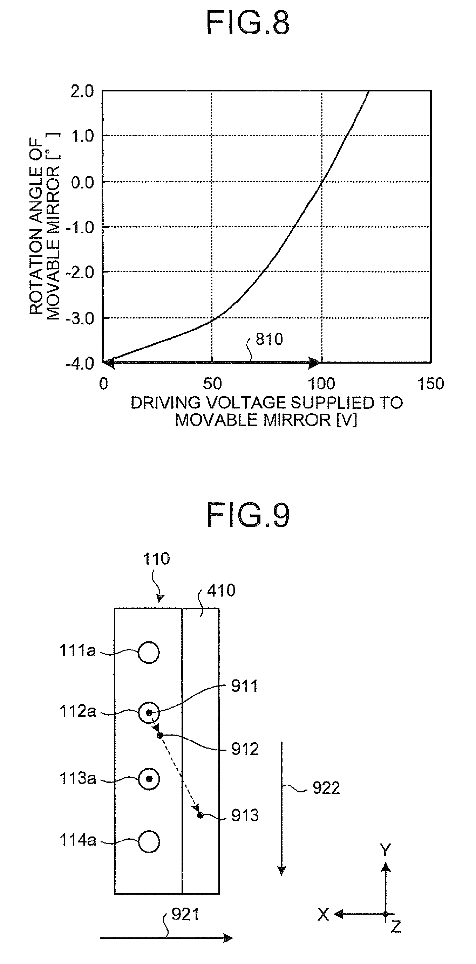

Fig. 8 is a graph depicting the relationship between the driving voltage supplied to the movable mirror and the rotation angle of the movable mirror. In Fig. 8, the horizontal axis indicates the driving voltage Vy1 (volt (V)) that the control unit 160 supplies to the movable mirror 151. The vertical axis indicates the rotation angle (°) of the movable mirror 151 about the Y-axis. As shown in Fig. 8, the movable mirror 151 is designed such that the higher the driving voltage Vy1 supplied to the movable mirror 151 is, the larger the rotation angle of the movable mirror 151 becomes.

For example, when the driving voltage Vy1 supplied to the movable mirror 151 is 0 V, the rotation angle of the movable mirror 151 is approximately -4.0°, and the transmissivity decreases further to a level lower than -25 dB (see Fig. 7). In contrast, when the driving voltage Vy1 supplied to the movable mirror 151 is 100 V, the rotation angle of the movable mirror 151 is approximately 0°, and the transmissivity is approximately 0 dB (see Fig. 7), which is the highest value. Therefore, the optimal point of the driving voltage Vy1 is 100 V.

In this case, in the attenuation control with respect to the X-axis direction, the control unit 160 adjusts the driving voltage Vy1 to be supplied to the movable mirror 151 within a range 810, which is lower than the optimal point of 100 V. In this case, the control unit 160 performs the attenuation control with respect to the X-axis within the range 710 in Fig. 7. For example, the control unit 160 adjusts the driving voltage Vy1 to approximately 80 V, and controls the transmissivity of the light to approximately -10 dB (the attenuation level to 10 dB) (see the control point 711 in Fig. 7).

For example, when the power of the optical device 100 is disconnected in this state and the driving voltage Vy1 to be supplied to the movable mirror 151 abruptly drops from 80 V to 0 V, the transmissivity decreases uniformly from -10 dB to -25 dB or lower. Therefore, even when the power of the optical device 100 is disconnected, an optical surge that abruptly increases the transmissivity does not occur.

Fig. 9 is a diagram of the I/O port group shown in Fig. 1 viewed from the Z-axis. As shown in Fig. 9, a position 911, a position 912, and a position 913 respectively indicate spots of the light reflected from the movable mirror 151 toward the I/O port group 110. A direction 921 indicates a direction of movement of the spot of the light reflected from the movable mirror 151 when the driving voltage Vy1 supplied to the movable mirror 151 is reduced. A direction 922 indicates a direction of movement of the spot of the light reflected from the movable mirror 151 when the driving voltage Vx1 supplied to the movable mirror 151 is reduced.

When the spot of the light reflected from the movable mirror 151 is the position 911, alignment of the light reflected from the movable mirror 151 with respect to the port 112 is maximized (see the optical path 611 in Fig. 6). When the control unit 160 performs the attenuation control, the driving voltage Vx1 and the driving voltage Vy1 supplied to the movable mirror 151 are reduced respectively from voltage levels that cause the spot of the light reflected from the movable mirror 151 to be at the position 911. In this case, the spot of the light reflected from the movable mirror 151 moves to the position 912, and alignment of the light reflected from the movable mirror 151 with respect to the port 112 decreases.

When the driving voltage Vx1 and the driving voltage Vy1 supplied from the control unit 160 to the movable mirror 151 are both 0 V, the spot of the light reflected from the movable mirror 151 moves to the position 913 in the shutter area 410. Hence, the control unit 160 performs the attenuation control by moving the spot of the light reflected from the movable mirror 151 to the position 912, closer to the position 913, rather than to the position 911.

In this state, when the driving voltage Vx1 and the driving voltage Vy1 are both reduced to 0 V due to a disconnection of the power to the optical device 100, the spot of the light reflected from the movable mirror 151 is moved away from the collimator 112a (position 911) to the position 912. Therefore, an optical surge that abruptly increases the transmissivity because the spot of the light reflected from the movable mirror 151 abruptly approaches to the collimator 112a does not occur (see Fig. 7 and Fig. 8).

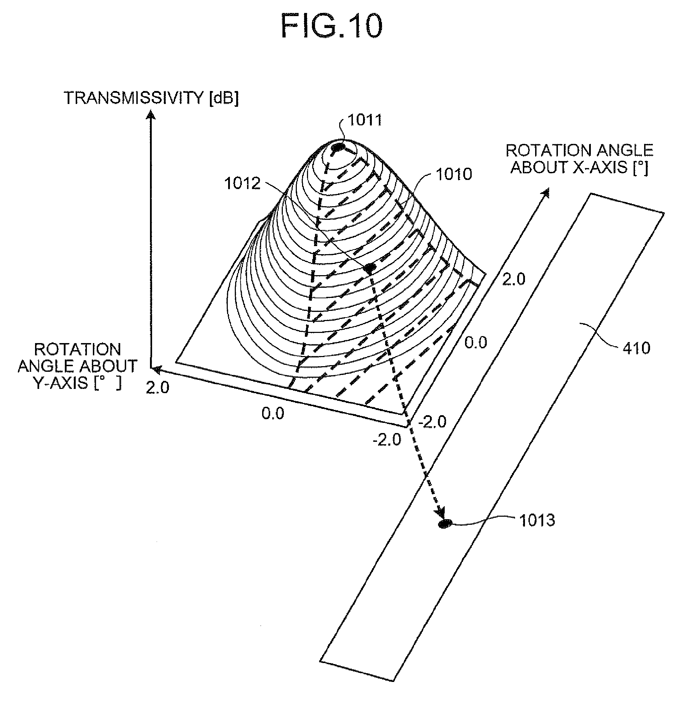

Fig. 10 is a graph for explaining the movement of the spot of the light in the optical device. In Fig. 7, changes in transmissivity of the light when the movable mirror 151 is rotated about the Y-axis are shown. However, Fig. 10 depicts changes in transmissivity of the light when the movable mirror 151 is rotated about the Y-axis and the X-axis.

The horizontal axis and the vertical axis indicate the rotation angle (°) of the movable mirror 151 about the X-axis and the rotation angle (°) about the Y-axis, respectively. The height axis indicates the transmissivity (dB) of the reflected light from the movable mirror 151 and output from the port 112. Control points 1011 to 1013 indicate the rotation angles of the movable mirror 151 about the respective axes, which locate the spot of the light reflected from the movable mirror 151 to the positions 911 to 913 (see Fig. 9), respectively.

As shown in Fig. 10, when the movable mirror 151 is rotated about the Y-axis and the X-axis, the transmissivity characteristics of the reflected light are represented by a mountain-like shape having the control point 1011 on the top thereof. When the rotation angle of the movable mirror 151 is at the control point 1011, the transmissivity of the reflected light output from the port 112 is maximized. In contrast, when the rotation angle of the movable mirror 151 is at the control point 1013, the transmissivity of the reflected light output from the port 112 is minimized.

The control unit 160 performs the attenuation control by reducing both the driving voltage Vx1 and the driving voltage Vy1 supplied to the movable mirror 151 within a range lower than the voltage at the control point 1011 at which alignment of the light with respect to the output port is maximized. An area 1010 indicates a range of the control point 1012 that satisfies conditions of the attenuation control. The area 1010 is indicative of transmissivity characteristics of the light and is an area surrounded by an XY plane and a ridge line forming a mountain-like shape of as viewed from the control point 1013.

In the attenuation control, when the driving voltage Vx1 and the driving voltage Vy1 are both reduced to 0 V due to, for example, a disconnection of the power source of the optical device 100 when the spot of the light reflected from the movable mirror 151 is in the area 1010, the control point of the movable mirror 151 moves from the control point 1012 to the control point 1013. At this time, as the control point 1012 of the movable mirror 151 is within the area 1010, transmissivity does not increase while the control point of the movable mirror 151 moves from the control point 1012 to the control point 1013 (does not ascend the mountain-like shape) and decreases uniformly.

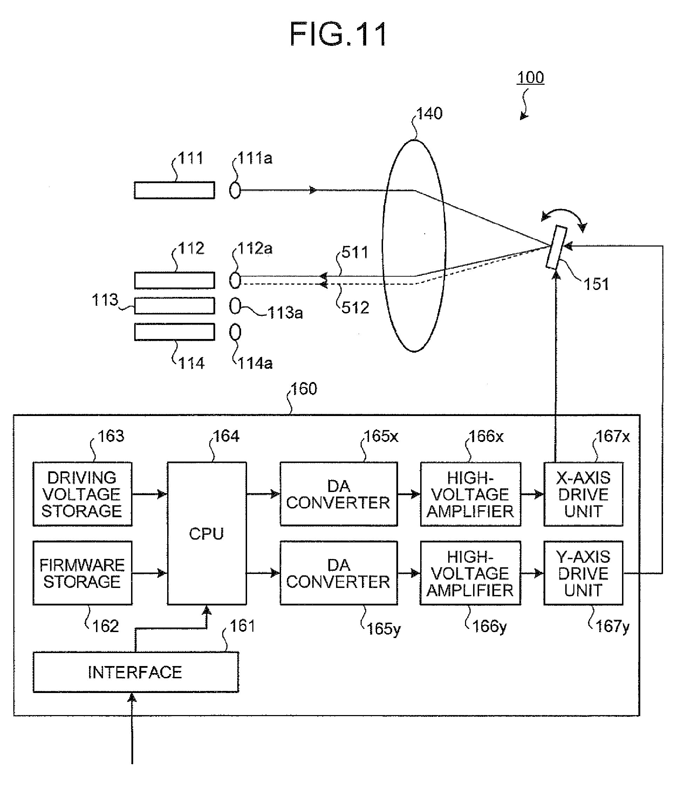

Fig. 11 is a block diagram of an example of a configuration of the control unit. As shown in Fig. 11, the control unit 160 includes an interface 161, a firmware storage 162, a driving voltage storage 163, a CPU 164, a digital-to-analog (DA) converter 165x, a DA converter 165y, a high-voltage amplifier 166x, a high-voltage amplifier 166y, an X-axis drive unit 167x, and a Y-axis drive unit 167y. The interface 161 acquires path switch control information and attenuation control information from an external source.

The interface 161 outputs the acquired information to the CPU 164. The path switch control information is information concerning the switch control performed by the control unit 160. The path switch control information indicates, for example, that the light input through the port 111 is output from the port 112. The path switch control information may indicate that a wavelength component of λ1 from the light input through the port 111 is output from the port 112 and a wavelength component of λ2 is output from the port 113.

The attenuation control information is information concerning the attenuation control performed by the control unit 160. More specifically, the attenuation control information indicates the attenuation level of the light output from the ports 112 to 114. For example, the attenuation control information indicates that the light to be output from the port 112 is decreased by 10 dB. The attenuation control information may indicate the power of the light to be output from the ports 112 to 114 after the attenuation control by the control unit 160.

A program (firmware) causing the control unit 160 to perform the switch control and the attenuation control is stored in the firmware storage 162. Switch correspondence information correlating the path switch control information with the driving voltages Vx1 to Vx5 and Vy1 to Vy5 to be supplied to the movable mirrors 151 to 155 is stored in the driving voltage storage 163.

Attenuation correspondence information correlating the attenuation control information (information relating to the attenuation level) with the driving voltages Vx1 to Vx5 and Vy1 to Vy5 to be supplied to the movable mirrors 151 to 155 is stored in the driving voltage storage 163. The driving voltages Vx1 to Vx5 and Vy1 to Vy5 included in the attenuation correspondence information are driving voltages within a range lower than the voltage at the optimal point at which the degree of alignment is maximized.

The CPU 164 loads the program stored in the firmware storage 162 to perform the switch control and the attenuation control. The CPU 164, from the switch correspondence information stored in the driving voltage storage 163, acquires the respective driving voltages corresponding to the path switch control information output from the interface 161. The CPU 164, from the attenuation correspondence information stored in the driving voltage storage 163, acquires the respective driving voltages corresponding to the attenuation control information output from the interface 161.

The CPU 164 calculates the driving voltage Vx1 and the driving voltage Vy1 to be supplied to the movable mirror 151 based on the respective driving voltages corresponding to the path switch control information and the respective driving voltages corresponding to the attenuation control information. The CPU 164 outputs to the DA converter 165x, a voltage control signal x indicating the calculated driving voltage Vx1. The CPU 164 outputs to the DA converter 165y, a voltage control signal y indicating the calculated driving voltage Vy1.

The DA converter 165x and the DA converter 165y convert the voltage control signal x and the voltage control signal y output from the CPU 164 into analog signals and output the voltage control signal x and the voltage control signal y as analog signals to the high-voltage amplifier 166x and the high-voltage amplifier 166y, respectively. The high-voltage amplifier 166x and the high-voltage amplifier 166y convert the voltage control signal x and the voltage control signal y output from the DA converter 165x and the DA converter 165y into the driving voltage Vx1 and the driving voltage Vy1, respectively.

The high-voltage amplifier 166x and the high-voltage amplifier 166y output the converted driving voltage Vx1 and the converted driving voltage Vy1 to the X-axis drive unit 167x and the Y-axis drive unit 167y, respectively. The X-axis drive unit 167x and the Y-axis drive unit 167y respectively supply the driving voltage Vx1 and the driving voltage Vy1 output from the high-voltage amplifier 166x and the high-voltage amplifier 166y to the movable mirror 151.

Accordingly, the control unit 160 rotates the movable mirror 151 biaxially about the X-axis and the axis in the Y-axis, whereby the switch control and the attenuation control of the movable mirror 151 are achieved. The control unit 160 further performs the switch control and the attenuation control for the movable mirrors 152 to 155 in an identical manner. In the explanation, the switch control and the attenuation control are performed simultaneously. However, the switch control may be performed first, and then after completion of the switch control, the attenuation control may be performed.

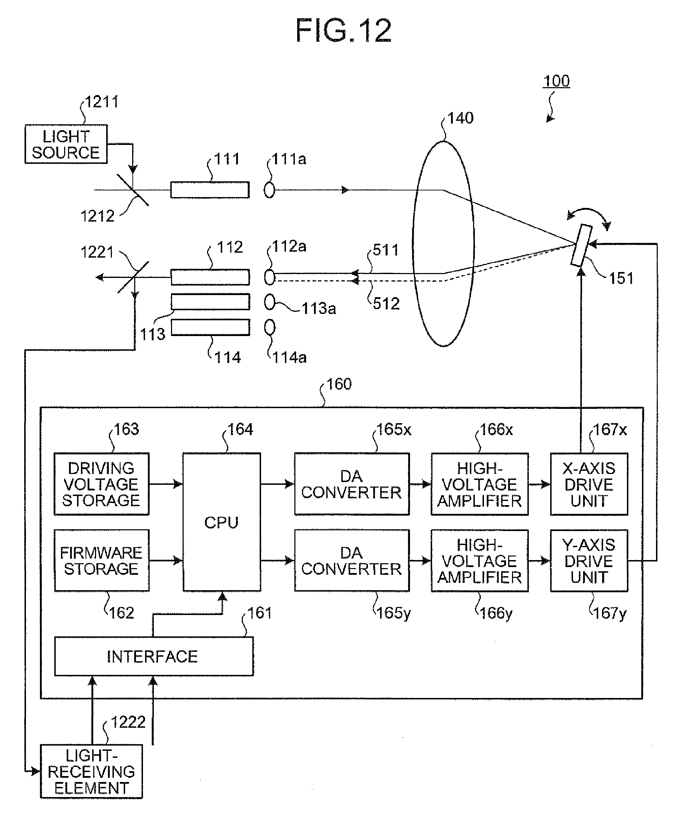

Fig. 12 is a block diagram of another example of a configuration of the control unit. In Fig. 12, components identical to those shown in Fig. 11 are designated by identical reference numerals, respectively and explanation thereof is omitted. The attenuation correspondence information stored in the driving voltage storage 163 is generated by performing a preprocessing operation of the attenuation control in advance. For example, the optical device 100 includes a light source 1211, couplers 1212 and 1221, and a light-receiving element 1222 in addition to the components shown in Fig. 11.

The light source 1211 outputs to the coupler 1212, light having a constant power. The coupler 1212 inputs the light output from the light source into the port 111. The coupler 1221 splits the light output from the port 112 and transmits a branch of the split light to the light-receiving element 1222. The light-receiving element 1222 outputs to the interface 161, an electric signal according to the power of the light transmitted from the coupler 1221. The interface 161 outputs the electric signal to the CPU 164.

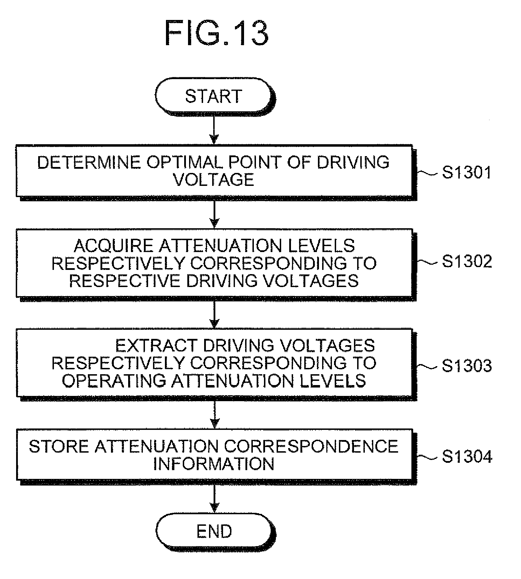

Fig. 13 is a flowchart of an example of the preprocessing operation of the attenuation control performed by the CPU. As shown in Fig. 13, optimal points of the driving voltage Vx1 and the driving voltage Vy1 at which the degree of alignment of the light with respect to the port 112 is maximized are determined (step S1301). The attenuation levels corresponding to the driving voltage Vx1 and the driving voltage Vy1 are acquired while changing the respective voltages in a range lower than the optimal points determined at step S1301 (step S1302).

The driving voltages respectively corresponding to operating attenuation levels are extracted from the attenuation levels acquired at step S1302 (step S1303). Information concerning the driving voltages that are extracted at step S1303 and respectively correspond to the operating attenuation levels is stored in the driving voltage storage 163 as the attenuation correspondence information (step S1304), and a series of the preprocessing operation is ended. The attenuation correspondence information relating to the ports 113 to 115 is generated in an identical manner, and is stored in the driving voltage storage 163.

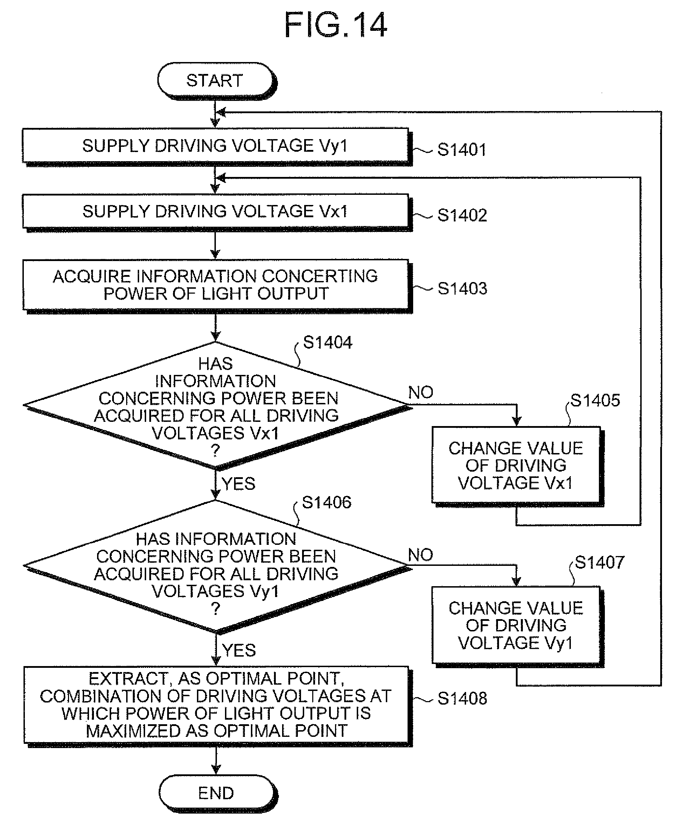

Fig. 14 is a flowchart of an example of step S1301 shown in Fig. 13. The process shown in Fig. 14 is performed when the light source 1211 inputs light into the port 111. The driving voltage Vy1 of a given value is supplied to the movable mirror 151 (step S1401). The driving voltage Vx1 of a given value is supplied to the movable mirror 151 (step S1402). Information concerning the power of the light output is acquired via the interface 161 (step S1403).

Whether information concerning the power of the light has been acquired for all given values of the driving voltages Vx1 within a predetermined search range is determined (step S1404). When the power of the light at all the given values of the driving voltages Vx1 has not been acquired (step S1404: NO), the given value of the driving voltage Vx1 is changed by a unit amount within the search range (step S1405), the process returns to step S1402 and continues.

When information concerning the power of the light at all the given values of the driving voltages Vx1 has been acquired at step S1404 (step S1404: YES), whether information concerning the power of the light has been acquired for all the given values of the driving voltages Vy1 within the search range is determined (step S1406). When information concerning the power of the light for all the given values of the driving voltages Vy1 has not been acquired (step S1406: NO), the given value of the driving voltage Vy1 is changed by a unit amount within the search range (step S1407), the process returns to step S1401 and continues.

When information concerning the power of the light has been acquired for all the given values of the driving voltages Vy1 at step S1406 (step S1406: YES), a combination of the driving voltage Vx1 and the driving voltage Vy1 at which the power of the light (indicated by the information acquired at step S1403) is maximized is extracted as an optimal point (step S1408), and a series of the process ends. With the process described above, the optimal point of the driving voltage Vx1 and the driving voltage Vy1 at which the alignment of the light with respect to the port 112 is maximized is determined (see step S1301 in Fig. 13).

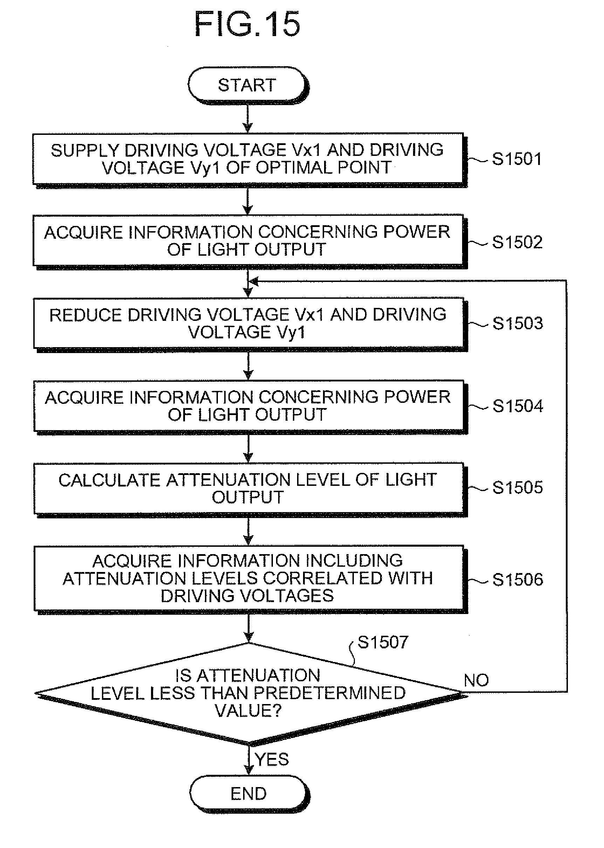

Fig. 15 is a flowchart of an example of step S1302 shown in Fig. 13. The process shown in Fig. 15 is performed when the light source 1211 inputs light into the port 111. The driving voltage Vx1 and the driving voltage Vy1 at the optimal point determined by the process shown in Fig. 14 is supplied to the movable mirror 151 (step S1501). Information concerning the power of the light output from the port 112 is acquired via the interface 161 (step S1502).

The driving voltage Vx1 and the driving voltage Vy1 supplied to the movable mirror 151 are reduced respectively (step S1503). Information concerning the power of the light output from the port 112 is acquired via the interface 161 (step S1502). The attenuation level of the light output from the port 112 at this time is calculated by subtracting the power indicated by the information acquired at step S1502 from the power indicated by the information acquired at step S1504 (step S1505).

Information correlating the attenuation level calculated at step S1505 with the driving voltages Vx1 and Vy1 at this time is acquired (step S1506). Whether the attenuation level calculated at step S1505 is less than a predetermined value is determined (step S1507). When the attenuation level is equal to or more than the predetermined value (step S1507: NO), the process returns to step S1503 and continues.

At step S1507, when the attenuation level is less than the predetermined value (step S1507: YES), a series of process ends. With the process described above, information concerning attenuation levels corresponding to the driving voltages Vx1 and the driving voltages Vy1 is acquired (see step S1302 in Fig. 13). The predetermined value at step S1507 is set to meet the lower limit of the attenuation level used in the optical device 100 (hereinafter, the attenuation level used in the optical device 100 is referred to as "operating attenuation level").

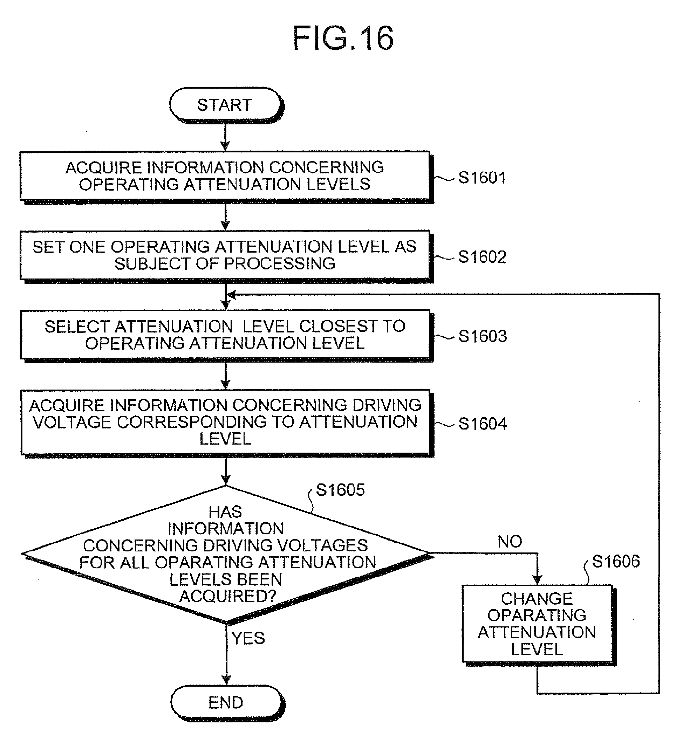

Fig. 16 is a flowchart of an example of step S1303 in Fig. 13. The information concerning the operating attenuation levels and indicative of predetermined operating attenuation levels is acquired (step S1601). One of the operating attenuation levels indicated by the information concerning the operating attenuation levels acquired at step S1601 is set as a subject of the processing (step S1602). An attenuation level that is closest to the operating attenuation level set as the subject of processing is selected from among the attenuation levels acquired by the process shown in Fig. 15 (step S1603).

Information concerning the respective driving voltages corresponding to the attenuation level selected at step S1603 is acquired from the information acquired by the process shown in Fig. 15 (step S1604). Whether information concerning the driving voltage has been acquired for all the operating attenuation levels indicated by the information concerning the operating attenuation level acquired at step S1601 is determined (step S1605).

When information concerning the driving voltage has not been acquired for all the operating attenuation levels at step S1605 (step S1605: NO), the operating attenuation level set as the subject of processing is changed to another of the operating attenuation levels indicated by the information concerning operating attenuation levels (step S1606), the process returns to step S1603 and continues.

When information concerning the driving voltage has been acquired for all the operating attenuation levels at step S1605 (step S1605: YES), a series of the process ends. With the process described above, the driving voltages respectively corresponding to the operating attenuation levels are extracted using the attenuation levels acquired by the process shown in Fig. 15 (see step S1303 in Fig. 13).

The information concerning the driving voltages respectively corresponding to the operating attenuation levels extracted by the process shown in Fig. 16 is stored in the driving voltage storage 163 as the attenuation correspondence information (see step S1304 in Fig. 13). Accordingly, only the correspondence information relating to the operating attenuation levels is extracted from the information correlating the attenuation levels with the driving voltages and acquired by the process shown in Fig. 15.

Therefore, the information to be stored in the driving voltage storage 163 is minimized, thereby reducing the volume stored to the driving voltage storage 163 and increasing the retrieval speed, by the CPU 164, of the attenuation control information stored in the driving voltage storage 163. Without performing the process shown in Fig. 16 (step S1304 in Fig. 13), the information correlating the attenuation levels with the driving voltages (acquired by the process shown in Fig. 15) may be stored in the driving voltage storage 163 as the attenuation correspondence information.

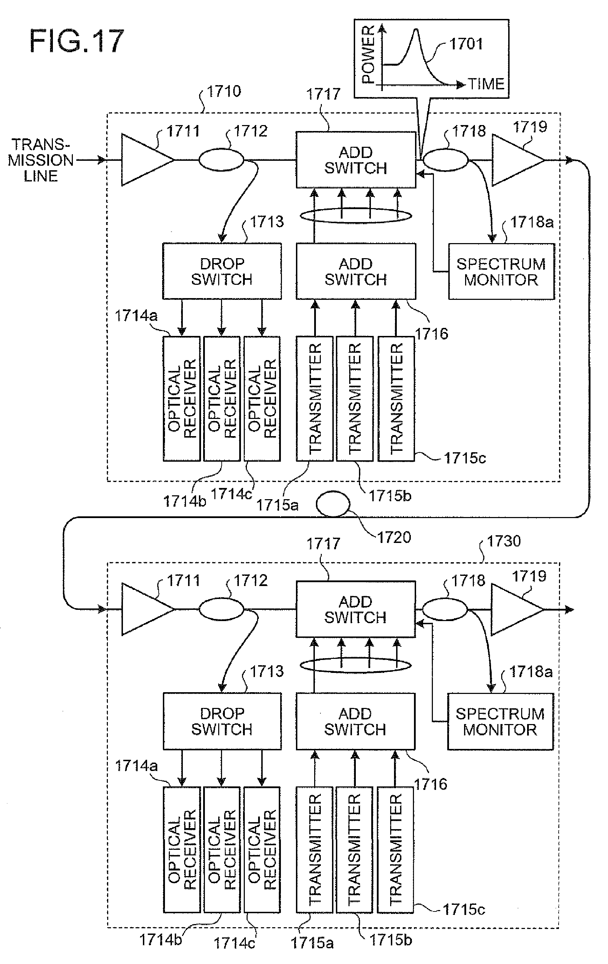

Fig. 17 is a block diagram of a functional configuration of an optical communication apparatus according to the embodiment. As shown in Fig. 17, an optical communication apparatus 1710 according to the embodiment is an OADM node including an optical amplifier 1711, a light splitter 1712, a drop switch 1713, optical receivers 1714a to 1714c, transmitters 1715a to 1715c, an add switch 1716, an add switch 1717, a light splitter 1718, a spectrum monitor 1718a, and an optical amplifier 1719.

The optical amplifier 1711 is a preamplifier that amplifies an optical signal transmitted from an upstream node of the optical communication apparatus 1710. The optical amplifier 1711 outputs the amplified optical signal to the light splitter 1712. The light splitter 1712 splits the optical signal output from the optical amplifier 1711 and respectively outputs the split optical signal to the drop switch 1713 and the add switch 1717.

The drop switch 1713 separates the optical signal output from the light splitter 1712 according to wavelength components thereof. The drop switch 1713 outputs the separated optical signals to the optical receivers 1714a to 1714c, respectively. The optical receivers 1714a to 1714c receive the optical signals output from the drop switch 1713, respectively.

The transmitters 1715a to 1715c output the optical signals having different wavelengths to the add switch 1716, respectively. The add switch 1716 selects all or a portion of the optical signals respectively output from the transmitters 1715a to 1715c and outputs the selected optical signal(s) to the add switch 1717. The add switch 1717 selects all or a portion of the optical signals output from the add switch 1716 or from other paths, and multiplexes the selected optical signals with the optical signal output from the light splitter 1712.

The add switch 1717 outputs the multiplexed optical signal to the light splitter 1718. The light splitter 1718 splits the optical signal output from the add switch 1717 and respectively outputs the split optical signal to the spectrum monitor 1718a and the optical amplifier 1719. The spectrum monitor 1718a monitors the optical signal output from the light splitter 1718.

For example, the spectrum monitor 1718a monitors the power of the optical signal, and outputs information indicating the power of the monitored optical signal to the add switch 1717. The optical amplifier 1719 is a postamplifier that amplifies the optical signal output from the light splitter 1718. The optical amplifier 1719 outputs the amplified optical signal to an optical communication apparatus 1730 via a transmission line 1720.

The optical device 100 is applicable to, for example, the drop switch 1713, the add switch 1716, and the add switch 1717. When the optical device 100 is applied to the add switch 1717, the optical device 100 performs the attenuation control to make the power of the optical signal that the optical device 100 outputs to the light splitter 1718 constant based on the power of the optical signal indicated by the information output from the spectrum monitor 1718a.

The optical communication apparatus 1730 is a node provided on the downstream side of the optical communication apparatus 1710. The optical communication apparatus 1730 has components identical to those of the optical communication apparatus 1710. The components of the optical communication apparatus 1730 are designated by identical reference numerals as with the optical communication apparatus 1710 and explanation thereof is omitted.

When the optical device 100 is not applied to the respective switches in the optical communication apparatus 1710, an optical surge as shown in a graph 1701 may occur due to a disconnection of the power to the respective switches. Conventionally in this case, the optical surge is amplified by the optical amplifier 1719 and is output to the downstream optical communication apparatus 1730, potentially resulting in damage of the respective optical elements of the optical communication apparatus 1730.

For example, optical surges occurring in the add switch 1716 and the add switch 1717 of the optical communication apparatus 1710 are amplified by the optical amplifier 1719 of the optical communication apparatus 1710 and the optical amplifier 1711 of the optical communication apparatus 1730, and are input to the optical receivers 1714a to 1714c of the optical communication apparatus 1730. Consequently, there is a risk of damage of the receivers 1714a to 1714c.

When the optical amplifier 1719 is an amplifier that performs automatic power control, the optical surges generated by the add switch 1716 or by the add switch 1717 are further amplified, thereby increases the load applied to the respective optical elements of the optical communication apparatus 1730. There is a further risk of damage of the optical receivers 1714a to 1714c of the optical communication apparatus 1710 by an optical surge occurring at the drop switch 1713 of the optical communication apparatus 1710.

In contrast, when the optical device 100 is applied respectively to the add switch 1716 and the add switch 1717, the occurrence of the optical surge is suppressed even when the power of the add switch 1716 and/or the add switch 1717 is disconnected. Therefore, even when the power is disconnected, damage of the respective optical elements of the optical communication apparatus 1730 is prevented. When the optical device 100 is applied to the drop switch 1713, the occurrence of the optical surge is suppressed even when the power of the drop switch 1713 is disconnected. Therefore, the damage of the respective optical elements of the optical communication apparatus 1710 is prevented even when the power is disconnected.

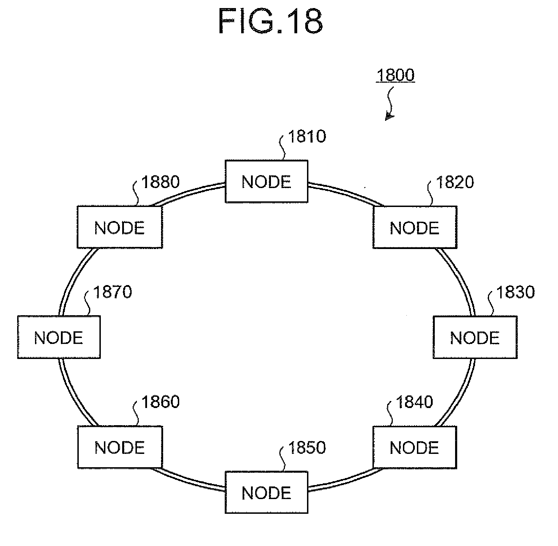

Fig. 18 is a block diagram of a configuration of an optical communication system according to the embodiment. As shown in Fig. 18, an optical communication system 1800 according to the embodiment includes nodes 1810 to 1880 connected in a ring-like shape. The nodes 1810 to 1880 are OADM nodes connected to other networks. The optical communication apparatus 1710 shown in Fig. 17 is applicable to each of the nodes 1810 to 1880.

When the optical communication apparatus 1710 including the optical device 100 is not applied to the nodes 1810 to 1880, conventionally if the power is disconnected at any one of the nodes 1810 to 1880, an optical surge occurs, which is propagated among the nodes 1810 to 1880 while being amplified at each of the nodes 1810 to 1880, bringing about a risk of damage of the optical elements of the nodes 1810 to 1880.

In contrast, by the application of the optical communication apparatus 1710 including the optical device 100 to each of the nodes 1810 to 1880, occurrence of the optical surge is suppressed even when the power is disconnected at any one of the nodes 1810 to 1880 by network building operations or when increasing the wavelengths used in wavelength division multiplexing. Therefore, stable operation of the optical communication system 1800 is achieved.

As described, according to the optical device 100 and the method of controlling the optical device 100, by adjusting the driving voltage, within the range lower than the voltage of the optimal point, to control attenuation of the light output from the port 112, a uniform decrease of the alignment of the light output from the port 112 is achieved when the driving voltage abruptly drops due to, for example, a disconnection of the power. Therefore, the attenuation of light is controlled and suppression of an optical surge at the time of a power disconnection is achieved.

The optical surge at the time of a power disconnection may also be suppressed by performing identical attenuation control for the light output from the port 113 or the port 114. As the optical device 100 does not require any components in addition to an existing wavelength selection switch, suppression of optical surges is achieved easily at a low cost.

When multiple axes of rotation are provided with respect to the movable mirrors 151 to 155 of the optical device 100, adjustment of the systems of driving voltages supplied to the movable mirrors 151 to 155 is performed within a range lower than the voltage at which the alignment of the light with respect to the port 112 is maximized. Accordingly, a uniform decrease of the alignment of the light output from the port 112 is achieved when the driving voltage abruptly drops due to, for example, a power disconnection of the optical device 100.

Storage of the attenuation correspondence information correlating the information concerning the attenuation level of the light in the driving voltage storage 163 with the driving voltages within a range lower than the voltage at the optimal point, and performance of the attenuation control based on the attenuation correspondence information stored in the driving voltage storage 163, enables suppression of optical surges with a simple control scheme without complication of the conventional control scheme of a wavelength selection switch.

The optical device 100 is particularly effective for the optical communication apparatus 1710 including the optical amplifier 1719 that amplifies the light output from the output ports of the add switch 1716 and/or the add switch 1717. With the application of the optical device 100 to the add switch 1716 and/or the add switch 1717, an optical surge at the time of a power disconnection at the add switch 1716 and/or the add switch 1717 is suppressed, thereby suppressing an optical surge occurring at the add switch 1716 and/or the add switch 1717 and amplified by the optical amplifier 1719. Hence, damage of the optical elements of the downstream optical communication apparatus 1730 is prevented.

In the embodiment, the explanation is made on the assumption that the optical device 100 is the wavelength selection switch. However, the optical device 100 may be a simple wavelength switch. In this case, the spectral dispersion element 130 of the optical device 100 is not necessary. Only one of the movable mirrors 151 to 155 is sufficient as the movable mirror to be provided in the optical device 100.

In the embodiment, the explanation is made on the assumption that the optical device 100 is used as the one-input and three-output wavelength selection switch. However, the number of input and output ports is not limited thereto. For example, when the ports 111 to 113 are used as the input ports and the port 114 is used as the output port, the control unit 160 performs the switch control whereby the light input through any one of the ports 111 to 113 is output from the port 114. The optical device 100 employed in this case is a three-input and one-output switch.

For example, when the port 111 and the port 112 are used as the input ports and the port 113 and the port 114 are used as the output ports, the control unit 160 performs the switch control to aligns the light input from the port 111 and the port 112 respectively with any one of the ports 113 and 114. The optical device 100 employed in this case is a two-input and two-output switch.

The explanation is made on the assumption that the movable mirrors 151 to 155 of the optical device 100 are the mirrors that rotate biaxially about the X-axis and the Y-axis. However the movable mirrors 151 to 155 may be mirrors that rotate uniaxially about the X-axis. In this case, the control unit 160 performs attenuation control that supplies the driving voltage Vx1 to the movable mirrors 151 to 155 and adjusts the driving voltage Vx1 in a range lower than the voltage at which the alignment of the light is maximized.

The optical device 100 is applicable to an attenuation apparatus having no function as a switch. In other words, the optical device 100 includes the port 111 as the input port, the movable mirror 151, the control unit 160, and the port 112 as the output port. In this case, the switch control is not performed and attenuation control that adjusts the driving voltage supplied to the movable mirror 151 within a range lower than the voltage at which the alignment of the light is maximized is performed.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An optical device (100) comprising:
a port group (110) including an input port and an output port;
a movable mirror (151) that reflects light input through the input port, aligns the light reflected with the output port, and according to a driving voltage, changes a degree of alignment of the light with respect to the output port; and
an attenuation control unit (160) that adjusts the driving voltage supplied to the movable mirror (151) to control attenuation of the light reflected, the attenuation control unit (160) adjusting the driving voltage within a range lower than a voltage at which the degree of alignment is maximized.

2. The optical device (100) according to claim 1, wherein the movable mirror (151) changes a reflection angle of the light according to the driving voltage.

3. The optical device (100) according to claim 1, wherein
the movable mirror (151) has a plurality of axes of rotation and rotates about the axes according to driving voltages supplied through a plurality of systems respectively corresponding to the axes, and
the attenuation control unit (160) adjusts the driving voltages within the range to control attenuation of the light reflected by the moveable mirror (151).

4. The optical device (100) according to claim 1 further comprising:
a storage unit (163) that stores attenuation correspondence information correlating a driving voltage within the range with information concerning an attenuation level of the light,
wherein the attenuation control unit (160) adjusts the driving voltage based on the driving voltage that is included the attenuation correspondence information and corresponds with the information input concerning the attenuation level of the light.

5. The optical device (100) according to claim 1, wherein the movable mirror (151) reflects the light in a direction that does not align the light with the port group (110) when the driving voltage is not supplied.

6. The optical device (100) according to claim 1, further comprising a switch control unit (160), wherein
the port group (110) includes a plurality of input ports or a plurality of output ports, and
the switch control unit (160) adjusts the driving voltage to control switching between the input ports when the port group includes a plurality of input ports and controls switching between the output ports when the port group includes a plurality of output ports.

7. The optical device (100) according to claim 1, wherein the movable mirror (151) is a microelectromechanical system mirror.

8. An optical communication apparatus comprising:
the optical device (100) according to any one of claims 1 to 7;
an amplifying unit (1711) that amplifies the light to be output from the output port; and
a transmitting unit (1715a) that transmits the light amplified by the amplifying unit.

9. A method of controlling an optical device that includes a port group including an input port and an output port, and a movable mirror that reflects light input through the input port, aligns the light reflected with the output port, and according to a driving voltage, changes a degree of alignment of the light with respect to the output port, the method comprising:
determining a driving voltage at which the degree of alignment of the light with respect to the output port is maximized; and
attenuating the light by adjusting the driving voltage supplied to the movable mirror within a range lower than the driving voltage determined at the determining.
